## Europäisches Patentamt

(19) **European Patent Office**

**Office européen des brevets**

(11) Veröffentlichungsnummer: **0 116 177**
**B1**

(12) # EUROPÄISCHE PATENTSCHRIFT

(45) Veröffentlichungstag der Patentschrift:
11.03.87

(51) Int. Cl.⁴: **F 16 D 3/50**

(21) Anmeldenummer: **83113239.4**

(22) Anmeldetag: **30.12.83**

(54) **Wellenkupplung.**

(30) Priorität: **12.02.83 DE 3304888**

(43) Veröffentlichungstag der Anmeldung:
**22.08.84 Patentblatt 84/34**

(45) Bekanntmachung des Hinweises auf die Patenterteilung:
**11.03.87 Patentblatt 87/11**

(84) Benannte Vertragsstaaten:
**BE CH FR GB LI LU NL SE**

(56) Entgegenhaltungen:
**DE - A - 3 036 570**
**GB - A - 2 053 415**
**US - A - 1 784 396**
**US - A - 2 446 942**
**US - A - 4 373 925**

(73) Patentinhaber: **Balcke-Dürr AG, Homberger Strasse 2,
D-4030 Ratingen (DE)**

(72) Erfinder: **Fickelscher, Kurt G., Herderstrasse 19,
D-6710 Frankenthal (DE)**

(74) Vertreter: **Klose, Hans, Dipl.-Phys.,
Kurfürstenstrasse 32, D-6700 Ludwigshafen (DE)**

ACTORUM AG

# Beschreibung

Die Erfindung betrifft eine Wellenkupplung mit zwei gleichartigen Kupplungshälften, welche quer zur Kraftübertragungsrichtung orientierte ebene Schrägflächen aufweisen, wobei jeweils zwei der ebenen Schrägflächen der einen bzw. der anderen Kupplungshälfte paarweise einander zugewandt sind und einen Zwischenraum begrenzen, mit in den Zwischenräumen angeordneten Gleitkeilen, welche jeweils zwei voneinander abgewandte und den Schrägflächen zugewandte ebene Gleitflächen aufweisen, sowie mit einem Druckkörper, auf welchem die Gleitkeile mit radialer Federbeaufschlagung abgestützt sind.

Aus der US-A 4 373 925 ist eine Wellenkupplung der genannten Art bekannt, deren Kupplungshälften als gleichartige Zentralräder mit Zähnen ausgebildet sind. Diese Zähne weisen ebene Schrägflächen auf, die einander paarweise zugeordnet sind und in radialer Richtung sich öffnende Zwischenräume begrenzen. In den Zwischenräumen befinden sich Gleitkeile eines Planetenrades mit einem ringförmigen, verformbaren und radial federelastischen Druckring. Die genannten Gleitkeile werden vom Druckkörper radial in die genannten Zwischenräume gedrückt. Bei Belastung der Wellenkupplung verdrehen sich die beiden Kupplungshälften relativ zueinander, wobei die genannten Zwischenräume verengt und die Gleitkeile gegen den ringförmigen Druckkörper gepresst werden. Der elastische Druckkörper wird verformt und bewirkt eine elastische Federbeaufschlagung der Gleitkeile. Die Elastizität der Wellenkupplung wird im wesentlichen durch den Druckkörper bestimmt. Bei Kupplungen für grosse Drehmomente ergeben sich insoweit Schwierigkeiten, als der Druckkörper sowohl im Hinblick auf die gewünschte Elastizität als auch im Hinblick auf die Belastbarkeit dimensioniert werden muss, wobei konträre Forderungen zu erfüllen sind. Je grösser die zu übertragenden Drehmomente sein sollen, desto grösser muss im Hinblick auf die zulässige Flächenpressung die Gesamtfläche sein, über welche die Gleitkeile an den Kupplungshälften anliegen. Wird die Anzahl der Gleitkeile bzw. die Anzahl der Deformationsstellen des Druckkörpers erhöht, so wird jedoch bei gleichem Bauvolumen die Elastizität der Wellenkupplung erheblich reduziert bzw. der zulässige Verdrehwinkel verringert. Bei einer derartigen Wellenkupplung nimmt mit zunehmender Anzahl von Gleitkeilen bzw. Deformationsstellen die erforderliche radiale Federkraft überproportional zu. So ist bei drei Deformationsstellen für die Radialkraft ein Faktor 30 zu berücksichtigen, während bei zwei Deformationsstellen ein Faktor in der Grössenordnung von 5 zu beachten ist. In der Praxis ist daher die Anzahl der Gleitkeile begrenzt, und für grosse Drehmomente müssen die Gleitkeile entsprechend gross ausgebildet werden, mit der Folge eines recht grossen Bauvolumens. Ferner müssen relativ enge Fertigungstoleranzen eingehalten werden, damit der Druckkörper die geforderte Elastizität aufweist. Ferner ergibt sich eine gewisse Temperaturabhängigkeit hinsichtlich Schwingungsverhalten und Dämpfungscharakteristik bei den bekannten Wellenkupplungen der genannten Art. Gemäss einer anderen Ausführungsform der genannten US-A 4 373 925 ist ein steifer Druckkörper zusammen mit einem Zahnband mit elastisch verformbaren Kupplungszähnen vorgesehen. Das Zahnband muss einerseits eine hinreichende Elastizität aufweisen und andererseits für das zu übertragende Drehmoment dimensioniert werden. Diese Ausführungsform der Wellenkupplung gelangt daher für kleinere Drehmomente zum Einsatz.

Ferner ist aus der US-A 1 784 396 ein Zahnrad einer Verbrennungsmaschine bekannt, welches Zahnrad zur Schwingungsdämpfung mit der Welle flexibel gekuppelt ist. Das Zahnrad enthält eine radial innen mit zwei Flanschen versehene Felge, welche auf zwei Flanschen einer radial innen liegenden Nabe gelagert ist. Gemäss einer ersten Ausführungsform weisen die Flansche der Nabe sich in axialer Richtung erstreckende Ausnehmungen auf, in welchen Gleitelemente angeordnet sind. Diese Gleitelemente sind mittels Federn und axial angeordneten Stangen miteinander verspannt, welche ebenfalls in den Ausnehmungen angeordnet sind. Die Fertigung und Montage erfordert aufgrund der Vielzahl der Einzelteile einen nicht unerheblichen Aufwand, wobei der zulässige Drehwinkelbereich zwischen Felge und Nabe insbesondere durch die Verbindungsstange begrenzt wird. In einer weiteren Ausführungsform sind in den axialen Ausnehmungen die Gleitelemente mittels Blattfedern in radialer Richtung beaufschlagt. Die genannten Blattfedern sind über einen Befestigungsring auf der radial innen liegenden Nabe aufgelagert und mittels Bolzen mit dem Befestigungsring verbunden. Die Gleitkörper und die Blattfedern sind jeweils an den axialen Stirnflächen des Zahnrades mittels zusätzlichen Blechen und Schrauben fixiert. Auch bei dieser Ausführungsform bedingt die Vielzahl von Einzelteilen einen hohen Fertigungs- und Montageaufwand.

Der Erfindung liegt die Aufgabe zugrunde, die Wellenkupplung der eingangs genannten Art mit geringem konstruktivem Aufwand dahingehend weiterzubilden, dass bei einem möglichst geringen Bauvolumen eine grosse Elastizität erreicht wird. Die Wellenkupplung soll im Grossmaschinenbau zur Übertragung von grossen Drehmomenten und bei hohen Drehzahlen geeignet sein.

Zur Lösung dieser Aufgabe wird vorgeschlagen, dass der Druckkörper steif ausgebildet ist und wenigstens eine in radialer Richtung angeordnete Kammer aufweist, und dass in der Kammer ein Federelement und/oder ein von Druckmittel beaufschlagter Kolben angeordnet ist, an welchem der Gleitkeil anliegt.

Die Wellenkupplung zeichnet sich durch eine einfache Konstruktion aus, und mit dem Federelement und/oder dem von Druckmittel beaufschlagten Kolben kann die Elastizität der Wellenkupplung zuverlässig und definiert vorgegeben werden. Die Elastizität ist von äusseren Einflüssen, insbesondere Fertigungstoleranzen und Temperatureinflüssen, weitgehend unabhängig. Durch die Anordnung der Kammer in dem Druckkörper erfolgt eine günstige Integration des Federlementes oder des Kolbens in den Druckkörper, wobei ohne Schwierigkeiten auch vergleichsweise lange Federwege und/oder hohe Federkräfte vorgegeben werden können. Auch ergibt sich durch die Anordnung der Kammer in dem Druckkörper eine nicht unwesentliche Reduzierung des Bauvolumens und insbesondere des Durchmessers der gesamten Wellenkupplung. Die Anzahl der Gleitkeile kann gering gehalten werden, wobei auch bei grossen Drehmomenten ein grosser Verdrehwinkel der beiden Kupplungshälften zugelassen werden kann. Die vorgeschlagene Wellenkupplung weist im Vergleich mit bisherigen Wellenkupplungen bei vergleichbarem Bauvolumen eine erheblich höhere Elastizität auf, wodurch entsprechend grosse Verdrehwinkel zwischen den Kupplungshälften bzw. den miteinander zu kuppelnden Maschinenteilen zulässig werden. So kann beispielsweise ein mittels der vorgeschlagenen Wellenkupplung an einen Antriebsmotor gekuppeltes Getriebe wesentlich kleiner ausgebildet werden, da nämlich Anfahrstösse und sonstige Lastspitzen von der Wellenkupplung zuverlässig aufgefangen werden. Da die radiale Federbeaufschlagung durch das Federelement und/oder den von Druckmittel beaufschlagten Kolben vorgegeben wird, müssen bei der Dimensionierung des Druckkörpers insoweit keine Kompromisse eingegangen werden, so dass die Wellenkupplung auch für sehr hohe Drehmomente zum Einsatz gelangen kann. So können Drehmomente grösser als eine Million Newton-Meter mit der vorgeschlagenen Wellenkupplung bei kleinem Bauvolumen zuverlässig übertragen werden.

In einer wesentlichen Ausgestaltung ist die Kammer als eine Radialbohrung in dem radial innerhalb der Gleitkeile angeordneten Druckkörper ausgebildet. Aufgrund der innenliegenden Anordnung des Druckkörpers werden die Gleitkeile infolge der Fliehkraft in radialer Richtung nach aussen an die Schrägflächen der Kupplungshälften angepresst. Die Fliehkraft unterstützt somit in zweckmässiger Weise die Federkraft des Federelementes bzw. des von Druckmittel beaufschlagten Kolbens, so dass letztere kleiner dimensioniert werden können. Dies ist vorteilhaft hinsichtlich des Bauvolumens. Sind mehrere Kammern vorhanden, so können diese problemlos symmetrisch angeordnet werden, wodurch der Druckkörper zentriert wird, und eine Unwucht zuverlässig vermieden werden kann.

Eine zweckmässige Ausgestaltung der Wellenkupplung ist dadurch gekennzeichnet, dass für das Druckmittel des Kolbens wenigstens eine Drosselstelle vorgesehen ist, über welche die Verbindung zu einer Ausgleichskammer und/oder einer Bohrung erfolgt. Mit einem vergleichsweise geringen Aufwand wird eine zuverlässige Dämpfung über das Druckmittel, insbesondere ein Hydrauliköl, erreicht. Belastungsstösse werden in nicht unerheblicher Weise gedämpft. Weist der Druckkörper wenigstens zwei Kammern auf, so können diese über die Drosselstelle miteinander in Verbindung stehen. Wird beispielsweise ein Kolben in radialer Richtung nach innen und ein weiterer Kolben nach aussen gedrückt, so wird das Druckmittel aus der einen Kammer über die Drosselstelle in die andere Kammer gelangen. Der Dämpfungsgrad kann in definierter und berechenbarer Weise vorgegeben werden, wobei insbesondere durch Gestaltung der Kammern, der Drosselstelle sowie des gesamten Strömungswegs für das Druckmittel den jeweiligen Anforderungen Rechnung getragen werden kann.

In einer besonderen Ausführungsform ist in der Ausgleichskammer ein von einem Federelement beaufschlagter Kolben angeordnet. Sind mehrere in radialer Richtung angeordnete Kammern vorhanden, so stehen zweckmässigerweise sämtliche Kammern mit der gleichen Ausgleichskammer in Verbindung. Die Fertigung und Montage kann in einfacher Weise erfolgen, da nämlich das Druckmittel erst nach dem vollständigen Zusammenbau der Wellenkupplung in die Kammern eingebracht wird, so dass bei den vorangegangenen Montagearbeiten auf Gleitkeile und Kupplungshälften keine Vorspannkräfte wirksam werden konnten.

In einer besonderen Ausgestaltung weist der Druckkörper eine zentrale Axialbohrung auf, über welche die als Radialbohrungen ausgebildeten Drosselstellen mit den radialen Kammern in Verbindung stehen. Die Herstellung des Druckkörpers und der zwischen den Kammern vorgesehenen Verbindungen wird in besonders einfacher Weise ermöglicht. Auch die Ausgleichskammer wird zweckmässig als eine Axialbohrung, und zwar mit einem etwas grösseren Durchmesser, ausgebildet und kann ebenso mit geringem Kostenaufwand in dem Druckkörper angeordnet werden.

Gemäss einer besonderen Ausführungsform ist die Wellenkupplung dadurch gekennzeichnet, dass pro Zwischenraum wenigstens ein schwenkbarer Ausgleichskörper in der Schrägfläche oder der Gleitfläche schwenkbar angeordnet ist. Derartige schwenkbare Ausgleichskörper sind aus der DE-A 3 036 570 grundsätzlich vorbekannt. Hierdurch wird auch für grosse Verdrehwinkel der beiden Kupplungshälften gewährleistet, dass die Gleitkeile und die Kupplungshälften über möglichst grosse Flächen aneinanderliegen können. Durch die vorgeschlagene Kombination derartiger Ausgleichskörper wird eine zusätzliche Vergrösserung des zulässigen Verdrehwinkels mit geringem konstruktivem Aufwand ermöglicht.

In einer zweckmässigen Ausgestaltung ist zwischen einem Teil der Aussenfläche des Gleitkeiles und der zugeordneten Oberfläche des Druckkörpers in der Ruhestellung der Wellenkupplung ein Abstand vorhanden, der mit zunehmender Belastung gegen Null geht. Es ist somit ein definierter Anschlag vorgegeben, und eine Überlastung der Federelemente wird zuverlässig vermieden. Hat der genannte Abstand den Wert Null erreicht, so wirkt die grundsätzlich elastische Wellenkupplung als eine im wesentlichen drehsteife Kupplung.

An Hand der in der Zeichnung dargestellten Ausführungsbeispiele wird die Erfindung näher erläutert. Es zeigen:

Fig. 1 teilweise im Schnitt und in einer axialen Ansicht eine Wellenkupplung, deren zentraler Druckkörper Kammern für Federelemente aufweist,

Fig. 2 teilweise einen axialen Schnitt und eine Ansicht der Wellenkupplung gemäss Fig. 1,

Fig. 3 eine Wellenkupplung mit Hydraulikdämpfung im unbelasteten Zustand,

Fig. 4 einen Schnitt entlang Linie IV gemäss Fig. 3,

Fig. 5 die Wellenkupplung ähnlich Fig. 3 im belasteten Zustand,

Fig. 6 charakteristische Kennlinien von zwei Ausführungsformen,

Fig. 7 einen Schnitt quer zur Längsachse einer Wellenkupplung ähnlich Fig. 1,

Fig. 8 teilweise einen axialen Längsschnitt durch eine Wellenkupplung mit einer zentralen Ausgleichskammer.

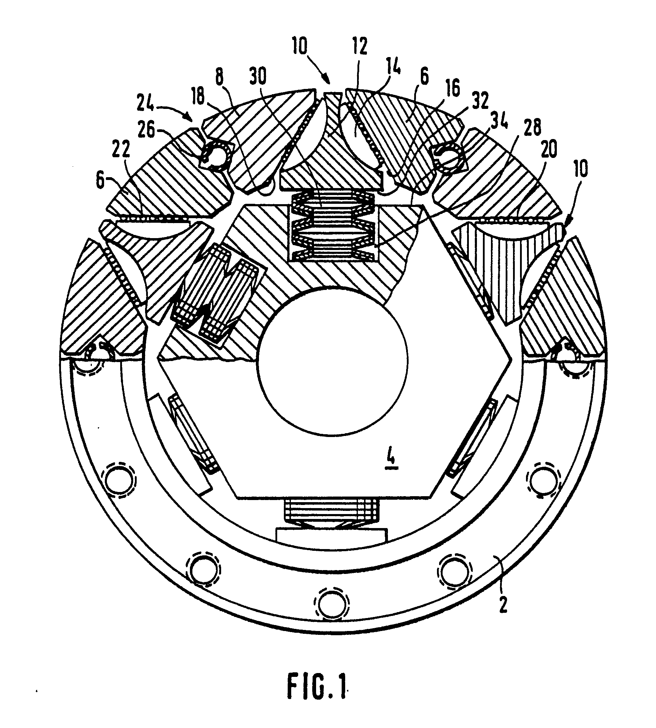

Aus Fig. 1 ist in der unteren Hälfte eine ringförmige Kupplungshälfte 2 zu erkennen, welche einen zentralen Druckkörper 4 umgibt. Aus der oberen Hälfte der Zeichnung sind Kupplungsklauen 6 und 8 zu erkennen, wobei die Klauen 6 zu der Kupplungshälfte 2 und die Klauen 8 zu einer weiteren Kupplungshälfte gehören. In Zwischenräumen 10 zwischen den Kupplungsklauen 6, 8 befinden sich Gleitkeile 12, welche Ausgleichskörper 14 enthalten, Schrägflächen 16, 18 der Klauen 6, 8 sind an den Ausgleichskörpern 14 Gleitflächen 20 zugeordnet. Um im wesentlichen radiale Rückstellkräfte zu vermeiden, können in einer alternativen, bevorzugten Ausführungsform zwischen den Gleitkeilen 12 bzw. deren Ausgleichskörper 14 und den Kupplungsklauen 6, 8 Nadellager 22 vorgesehen sein. In weiteren Zwischenräumen 24 befinden sich Ringfedern 26, mittels welchen beim Auftreten von negativen Drehmomenten ein hartes Anschlagen der Kupplungsklauen 6, 8 vermieden wird. Es sei hervorgehoben, dass im Rahmen der Erfindung der oder auch die Ausgleichskörper in entsprechender Weise auf den Kupplungshälften angeordnet sein können.

Der zentrale Druckkörper 4 weist radial gerichtete Kammern 28 auf, die jeweils einem Gleitkeil 12 zugeordnet sind. In jeder Kammer befindet sich ein Federelement 30, welches hier als ein Tellerfederpaket ausgebildet ist. Das Federelement kann im Rahmen dieser Erfindung auch als eine Reibfeder ausgebildet sein, welche aus zwei äusseren Ringen besteht, auf welchen über konische Flächen sich ein mittlerer Ring abstützt. Bei einer derartigen Reibfeder lässt sich der Reibbeiwert und folglich auch die Dämpfungscharakteristik sehr leicht und genau vorgeben. Der Gleitkeil 12 weist eine ebene Aussenfläche 32 auf, welche einer gleichfalls ebenen Oberfläche 34 des starren Druckkörpers 4 gegenüberliegt. Mit einem Teil überragt der Gleitkeil 12 mit seiner Aussenfläche 32 die Kammer 28, so dass hierdurch ein zuverlässiger Anschlag beim Zusammendrücken des Federelements 30 sichergestellt ist.

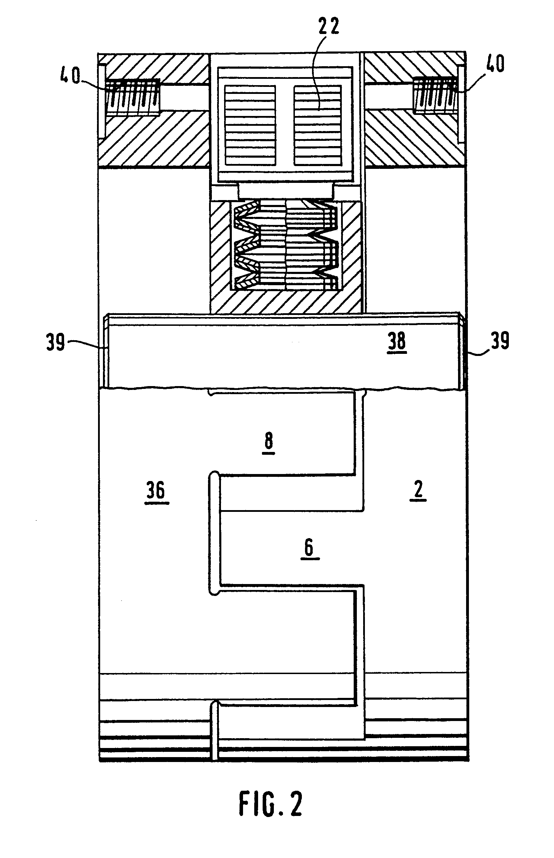

Fig. 2 zeigt einen axialen Längsschnitt bzw. eine seitliche Ansicht der Klauenkupplung, wobei nunmehr auch die zweite Kupplungshälfte 36 erkennbar ist. Der Druckkörper 4 ist als ein im wesentlichen starrer Ring ausgebildet und auf einer Welle 38 abgestützt. Im oberen Teil der Fig. 2 ist wiederum das Nagellager 22 erkennbar. Es sei hier nochmals hervorgehoben, dass mittels derartiger Lager der Reibungseinfluss zwischen Gleitkeil und Kupplungsklauen wesentlich reduziert wird, so dass Rückstellkräfte zwischen den Kupplungshälften 2, 36 praktisch vermieden werden. Die Kupplungshälften 2, 36 enthalten Gewindebohrungen 40, über welche die Verbindung zu anderen Maschinenteilen, bzw. Wellen hergestellt werden kann. Die Welle 38 kann mit ihren Stirnflächen 39 insbesondere an den miteinander zu kuppelnden Maschinenwellen anliegen und somit axial fixiert sein. Die erfindungsgemässe symmetrische Abstützung und/oder Anordnung der Federelemente gewährleistet unter allen Betriebsbedingungen eine einwandfreie Zentrierung des Druckkörpers 4.

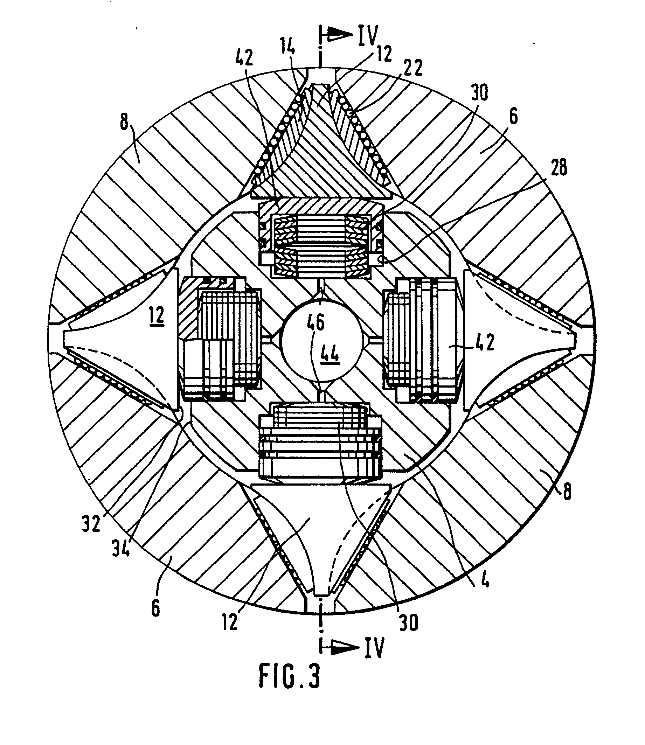

Fig. 3 zeigt eine Ausführungsform der Wellenkupplung, bei welcher der zentrale Druckkörper 4 vier symmetrisch bezüglich der Drehachse angeordnete Kammern 28 aufweist. In jeder Kammer befindet sich ein Kolben 42 sowie ein Federelement 30, welches einerseits auf dem radial innenliegenden Boden der Kammer 28 und andererseits auf der Innenfläche des Kolbens 42 abgestützt ist. Der Druckkörper 4 enthält ferner eine Axialbohrung 44, die über radial gerichtete Bohrungen 46 zur Verbindung der Axialbohrung 44 mit den vier radialen Kamern 28. Die Gleitkeile 12 liegen mit ihren ebenen, radial innenliegenden Aussenflächen 32 an den Kolben 42 an. Es sind hier auch die Ausgleichskörper 14 der Gleitkeile 12 klar zu erkennen, wobei zwischen den Ausgleichskörpern 14 und den Kupplungsklauen 6, 8 auch die Nagellager 22 zwecks Vermeidung von Rückstellkräften dargestellt sind.

Die Kammern 28 sowie die Axialbohrung 44 sind mit einem Druckmittel, insbesondere Hydrauliköl, angefüllt und die radialen Bohrungen 46 bilden Drosselstellen für das Druckmittel. Es ist ersichtlich, dass bei Belastung der Kupplung und hierbei eintretenden radialen Bewegungen der Gleitkeile 12 das Druckmittel über die radialen Bohrungen 46 bzw. Drosselstellen in entsprechender Weise strömt, wobei eine wirksame Dämpfung der Bewegungen erfolgt. Insbesondere durch entsprechende Dimensionierung der Drosselstellen bzw. radialen Bohrungen 46 kann das Dämpfungsverhalten in definierter Weise vorgegeben werden. Es ist hierbei von entscheidender Bedeutung, dass Umgebungseinflüsse, insbesondere Temperaturänderungen oder Abnutzung, nur einen vergleichsweise geringen Einfluss haben und letztendlich das Dämpfungsverhalten der Wellenkupplung für alle Einsatzbedingungen exakt berechnet und vorgegeben werden kann.

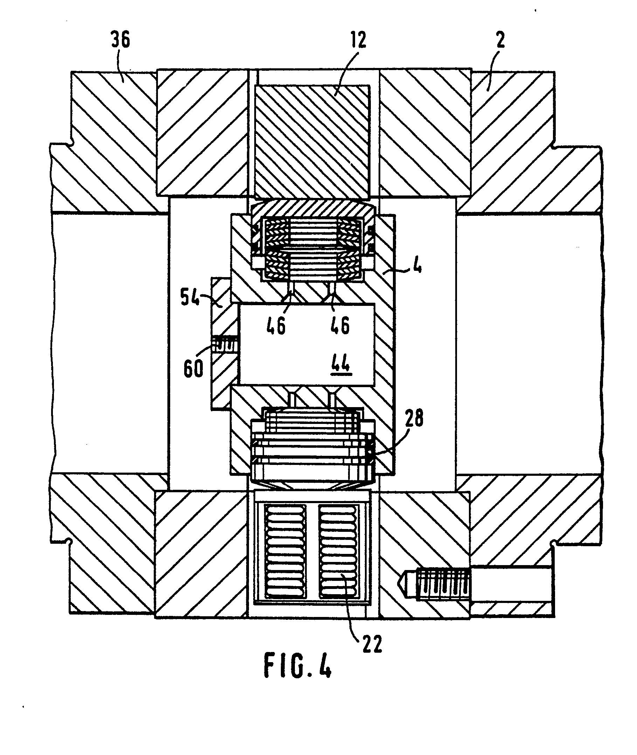

Der Schnitt gemäss Fig. 4 zeigt den Druckkörper 4, welcher eine zentrale Axialbohrung 44 aufweist. Die Axialbohrung 44 ist hier als Sackbohrung ausgebildet und mittels eines Deckels 54 abgeschlossen. Durch eine Öffnung 60 im Deckel 54 kann Druckmittel in einfacher Weise in die Kammer 44 eingebracht werden, welche dann mittels einer Schraube oder dergleichen abgeschlossen wird. Die Axialbohrung 44 steht mit jeder der radialen Kammern 28 über zwei radiale Bohrungen 46 in Verbindung. Es ist ersichtlich, dass auch durch die Anzahl der radialen Bohrungen 46 das Dämpfungsverhalten in der gewünschten Weise vorgegeben werden kann.

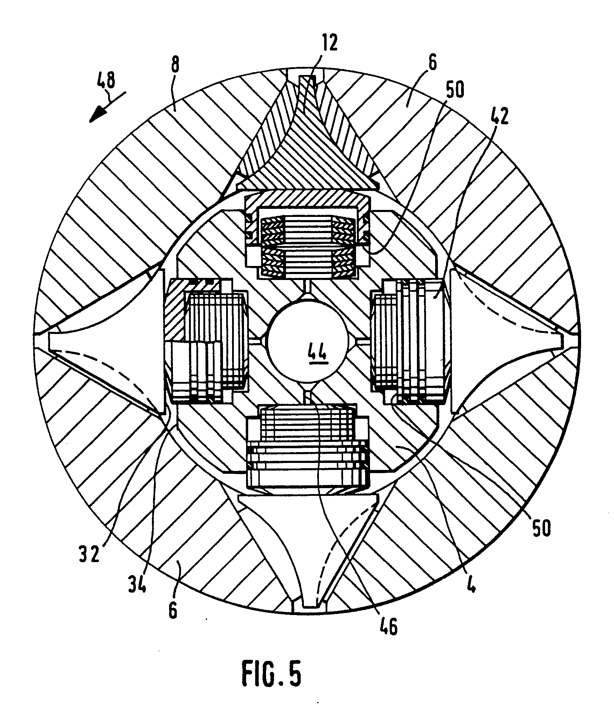

Fig. 5 zeigt eine modifizierte Ausführungsform, bei welcher die Gleitkeile 12 und die Klauen 6, 8 über Gleitlagerungen aneinander anliegen. Die eine Kupplungshälfte und somit die Kupplungsklauen 8 sind bezüglich der anderen Kupplungshälfte mit den Kupplungsklauen 6 in Richtung des Pfeiles 48 von einem Drehmoment belastet. Dies hat zur Folge, dass der in der Zeichnung links dargestellte Gleitkeil 12 und ebenso auch der rechts befindliche Gleitkeil in radialer Richtung nach innen gedrückt werden. Die in der Zeichnung unten bzw. oben befindlichen Gleitkeile 12 werden hingegen in radialer Richtung nach aussen bewegt. Ein Teil des Druckmediums aus den seitlichen Kammern 28 ist hierbei über die radialen Bohrungen 46, über die Axialbohrung 44 und schliesslich die oberen bzw. unteren Bohrungen 46 in die dortigen Kammern 28 gedrückt worden. Folglich ergibt sich eine Dämpfung der geschilderten Bewegungsabläufe. Der Dämpfungsgrad ist durch entsprechende Dimensionierung des vom Druckmittel beaufschlagten Systems und insbesondere der Drosselstellen definiert vorgegeben.

Die in der Zeichnung seitlich dargestellten Gleitkeile 12 sind aufgrund der Belastung in radialer Richtung nach innen gedrückt, wobei sich der Abstand der Aussenfläche 32 zur ebenen Oberfläche 34 des Druckkörpers 4 verringert hat. Bei weiterer Belastung kommen die genannten Flächen 32 und 34 in Anlage, so dass die Federelemente und das Hydrauliksystem vor einer zu starken Belastung geschützt werden. Auch die innere Stirnfläche 50 des Kolbens 42 kann mit einer zugeordneten Fläche des Druckkörpers 4 in Eingriff gebracht werden, um ebenfalls einen Anschlag herzustellen. Erfindungsgemäss erfolgt somit eine Begrenzung des elastischen Bereiches der Kupplung und bei einer weiteren Vergrösserung der Belastung weist die Wellenkupplung ein drehsteifes Übertragungsverhalten auf.

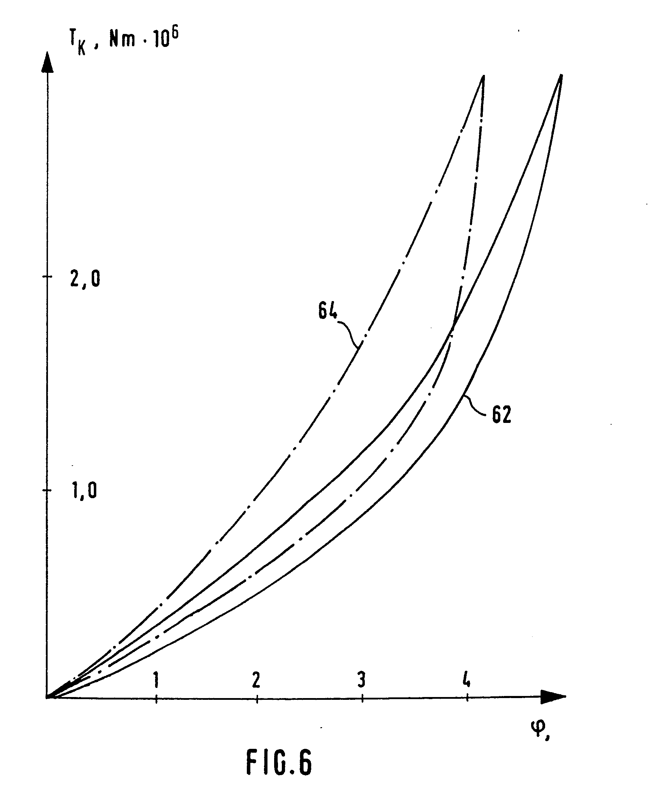

Fig. 6 zeigt zwei charakteristische Kennlinien von zwei unterschiedlich ausgeführten Wellenkupplungen. Die ausgezogene Linie 62 gilt für eine Kupplung, deren Gleitkeile über Rollkörper, insbesondere Nadellager, auf den Schrägflächen der zugeordneten Kupplungsklauen abgestützt sind. Die strichpunktierte Linie 64 gilt hingegen für eine Kupplung, deren Gleitkeile mit einem geeigneten Schmiermittel geschmiert sind oder über einen DU-Belag auf den Schrägflächen der zugeordneten Kupplungsklauen abgestützt sind. Aus der Kupplungscharakteristik ist unmittelbar zu entnehmen, dass die erfindungsgemässe Wellenkupplung auch für sehr grosse Drehmomente grosse Verdrehwinkel und eine grosse Elastizität aufweist, wobei auch für Drehmomente T grösser 1 Million Newtonmeter die hohe Elastizität gegeben ist; das Bauvolumen ist dennoch sehr gering. Ferner ist ersichtlich, dass durch entsprechende Vorgabe des Reibbeiwertes zwischen Gleitkeil und Kupplungsklauen die Kupplungscharakteristik in der gewünschten Weise vorgegeben werden kann.

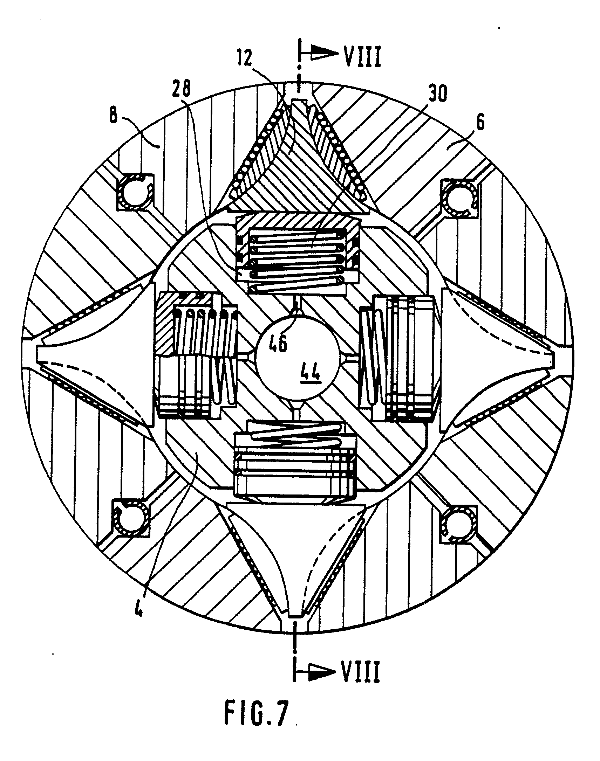

Fig. 7 zeigt eine Ausführungsform, welche grundsätzlich mit der Kupplung gemäss Fig. 1 vergleichbar ist. Zusätzlich ist auch hier die Axialbohrung 44 vorhanden, welche mit den vier radialen Kammern 28, für vier symmetrisch angeordnete Gleitkeile 12 über radiale Bohrungen 46 in Verbindung steht. Bei dieser Ausführungsform werden die vier Gleitkeile 12 gegen die Kraft der Federelemente 30 in radialer Richtung nach innen gedrückt.

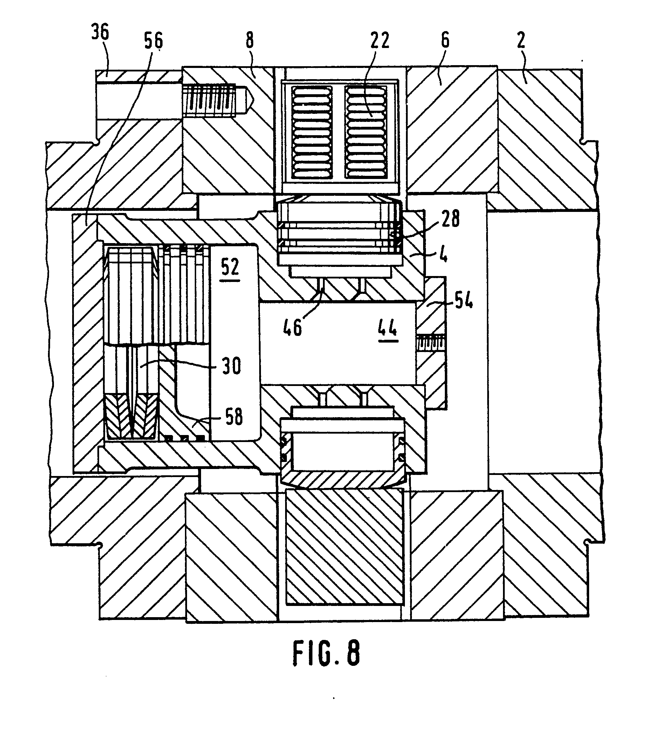

Aus Fig. 8 ist zu erkennen, dass der zentrale Druckkörper eine Ausgleichskammer 52 aufweist, welche sich unmittelbar an die Axialbohrung 44 anschliesst und ebenfalls mit dem Druckmittel, insbesondere dem Hydrauliköl angefüllt ist. Die Ausgleichskammer 52 ist mit einem Deckel 56 abgeschlossen, wobei zwischen Deckel 56 und einem Kolben 58 ein Federelement 30 vorgesehen ist. Im Rahmen der Erfindung genügt dieses einzige Federelement 30, so dass die oben erläuterten Federelemente 30 in den radialen Kammern 28 auch entfallen können. Mittels des Federlements 30 in der Ausgleichskammer 52 wird die radiale Federbeaufschlagung der Gleitkeile 12 über das zwischengeschaltete Druckmittel erfolgen. Im Rahmen dieser Erfindung liegen jedoch auch solche Ausführungsformen, in welchen sowohl in der Ausgleichskammer 52 als auch in den radialen Kammern 28 Federelemente 30 angeordnet sind. Bei Belastung der dargestellten Wellenkupplung werden, wie bereits ausgeführt, sämtliche Gleitkeile in radialer Richtung nach innen bewegt. Die Ausgleichskammer 52 mit dem federbeaufschlagten Kolben 58 ermöglicht das Abströmen von Druckmittel aus den Kammern 28, die radialen Bohrungen 46 in die Ausgleichskammer 52 um die Dämpfung zu erhalten.

**Patentansprüche**

1. Wellenkupplung mit zwei gleichartigen Kupplungshälften (2, 36), welche quer zur Kraftübertragungsrichtung orientierte ebene Schrägflächen (16, 18) aufweisen, wobei jeweils zwei der ebenen Schrägflächen (16 bzw. 18) der einen bzw. der anderen Kupplungshälfte (2 bzw. 36) paarweise einander zugewandt sind und einen Zwischenraum (10) begrenzen, mit in den Zwischenräumen (10) angeordneten Gleitkeilen (12), welche jeweils zwei voneinander abgewandte und den Schrägflächen (16 bzw. 18) zugewandte ebene Gleitflächen (20) aufweisen, sowie mit einem Druckkörper (4), auf welchem die Gleitkeile (12) mit radialer Federbeaufschlagung abgestützt sind, dadurch gekennzeichnet, dass der Druckkörper (4) steif ausgebildet ist und wenigstens eine in radialer Richtung angeordnete Kammer (28) aufweist und dass in der Kammer (28) ein Federelement (30) und/oder von Druckmittel beaufschlagter Kolben (42) angeordnet ist, an welchem der Gleitkeil (12) anliegt.

2. Wellenkupplung nach Anspruch 1, dadurch gekennzeichnet, dass die Kammer (28) als eine Radialbohrung in dem radial innerhalb der Gleitkeile angeordneten Druckkörper (4) ausgebildet ist.

3. Wellenkupplung nach Anspruch 1 oder 2, dadurch gekennzeichnet, dass für das Druckmittel des Kolbens (42) wenigstens eine Drosselstelle vorgesehen ist, über welche die Verbindung zu einer Ausgleichskammer (52) und/oder einer Bohrung (44) erfolgt.

4. Wellenkupplung nach Anspruch 3, dadurch gekennzeichnet, dass in der Ausgleichskammer (52) ein von einem Federelement beaufschlagter Kolben (58) angeordnet ist.

5. Wellenkupplung nach Anspruch 3 oder 4, dadurch gekennzeichnet, dass der Druckkörper (4) eine zentrale Axialbohrung (44) aufweist, welche über die als Radialbohrungen (46) ausgebildeten Drosselstellen mit den radialen Kammern (28) in Verbindung stehen.

6. Wellenkupplung nach einem der Ansprüche 1 bis 5, dadurch gekennzeichnet, dass pro Zwischenraum (10) wenigstens ein schwenkbarer Ausgleichskörper (14) in der Schrägfläche (16, 18) oder der Gleitfläche (20) schwenkbar angeordnet ist.

7. Wellenkupplung nach einem der Ansprüche 1 bis 6, dadurch gekennzeichnet, dass der Gleitkeil (12) eine dem Druckkörper (4) zugeordnete Aussenfläche (32) aufweist, die eben ausgebildet ist und im wesentlichen senkrecht zur Radialebene sowie parallel zur Drehachse angeordnet ist.

8. Wellenkupplung nach einem der Ansprüche 1 bis 7, dadurch gekennzeichnet, dass zwischen einem Teil der Aussenfläche (32) des Gleitkeiles (2) und einer zugeordneten Oberfläche (34) des Druckkörpers (4) in der Ruhestellung ein Abstand vorhanden ist, welcher mit zunehmender Belastung gegen Null geht.

## Claims

1. A shaft coupling with two similar coupling halves (2, 36) which comprise flat oblique faces (16, 18) orientated transversely to the direction of the transmission of force, two of the flat oblique faces (16 and 18 respectively) of one or other coupling half (2 or 36 respectively) facing one another in pairs in each case and defining an interspace (10), with slide wedges (12) which are disposed in the interspaces (10) and which each comprise two flat sliding faces (20) remote from one another and facing the oblique faces (16 and 18 respectively), and with a thrust member (4), on which the slide wedges (12) are supported with radial spring action, characterized in that the thrust member (4) is made inflexible and comprises at least one chamber (28) arranged in the radial direction, and a spring element (30) and/or a piston (42) acted upon by pressure medium is disposed in the chamber (28), the slide wedge (12) resting against the said spring element (30) or piston (42).

2. A shaft coupling according to Claim 1, characterized in that the chamber (28) is constructed as a radial bore in the thrust member (4) arranged radially inside the slide wedges.

3. A shaft coupling according to Claim 1 or 2, characterized in that at least one restrictor, by way of which the connexion to a compensation chamber (52) and/or a bore (44) is made, is provided for the pressure medium of the piston (42).

4. A shaft coupling according to Claim 3, characterized in that a piston (58) acted upon by a spring element is disposed in the compensation chamber (52).

5. A shaft coupling according to Claim 3 or 4, characterized in that the thrust member (4) comprises a central axial bore (44) which is connected to the radial chambers (28) by way of the restrictors constructed as radial bores (46).

6 A shaft coupling according to any one of Claims 1 to 5, characterized in that at least one pivotable compensation member (14) per interspace (10) is provided in the oblique face (16, 18) or the sliding face (20).

7. A shaft coupling according to any one of Claims 1 to 6, characterized in that the slide wedge (12) comprises an outer face (32) which is associated with the thrust member (4) and which is made flat and is arranged substantially perpendicular to the radial plane and parallel to the axis of rotation.

8. A shaft coupling according to any one of Claims 1 to 7, characterized in that a gap, which with increasing stressing approaches zero, is present between part of the outer face (32) on the slide wedge (12) and an associated surface (34) of the thrust member (4) in the rest position.

## Revendication

1. Accouplement d'arbres comprenant:

a) deux demi-accouplements analogues (2, 36) qui présentent des surfaces inclinées planes (16, 18) orientées transversalement à la direction de la transmission des forces, deux surfaces inclinées planes (16 ou 18) qui appartiennent l'une à un demi-accouplement et l'autre à l'autre demi-accouplement (2 ou 36 respectivement) se faisant face dans chaque paire et délimitant un intervalle (10);

b) des coins glissants (12) disposés dans les intervalles (10), dont chacun présente deux surfaces de glissement planes (20), qui se tournent le dos et font face aux surfaces inclinées (16 ou 18 respectivement); ainsi que

c) un corps de pression (4) sur lequel les coins glissants (12) sont appuyés avec une contrainte élastique radiale, caractérisé en ce que le corps de pression (4) est de configuration rigide et présente au moins une chambre (28) orientée dans une direction radiale, et en ce que, dans la chambre (28), sont disposés un élément élastique (30) et/ou un piston (42) chargé par un fluide sous pression, et contre lequel ou lesquels le coin glissant (12) prend appui.

2. Accouplement selon la revendication 1, caractérisé en ce que la chambre (28) est constituée par un perçage radial dans le corps de pression (4), lequel est disposé radialement à l'intérieur des coins glissants.

3. Accouplement selon la revendication 1 ou la revendication 2, caractérisé en ce qu'il est prévu, pour le fluide sous pression du piston (42), au moins un étranglement par l'intermédiaire duquel s'établit la liaison avec une chambre d'équilibrage (52) et/ou un perçage (44).

4. Accouplement selon la revendication 3, caractérisé en ce qu'un piston (58) chargé par un élément élastique est agencé dans la chambre d'équilibrage (52).

5. Accouplement selon la revendication 3 ou la revendication 4, caractérisé en ce que le corps de pression (4) présente un perçage axial central (44) qui est en liaison avec les chambres radiales (28) par l'intermédiaire des étranglements qui sont constitués par les perçages radiaux (46).

6. Accouplement selon l'une des revendications 1 à 5, caractérisé en ce qu'il comprend, pour chaque intervalle (10), au moins un corps d'alignement oscillant (14) qui est monté oscillant dans la surface inclinée (16, 18) ou dans la surface de glissement (20).

7. Accouplement selon l'une des revendications 1 à 6, caractérisé en ce que le coin glissant (12) présente une surface externe (32) coopérant avec le corps de pression (4), surface qui est de configuration plane et est disposée sensiblement perpendiculairement au plan radial et parallèlement à l'axe de rotation.

8. Accouplement selon l'une quelconque des revendications 1 – 7 caractérisé en ce que, dans la position de repos, il existe entre une partie de la surface externe (32) du coin glissant (12) et la surface (34) du corps de pression (4) qui coopère avec elle, un écartement qui tend vers zéro avec l'accroissement de la charge.

FIG.1

FIG. 2

FIG.3

FIG. 4

FIG.5

FIG.6

FIG.7

FIG. 8